# EUROPÄISCHE PATENTSCHRIFT

(11) **EP 0 376 107 B1**
(45) Veröffentlichungstag und Bekanntmachung des Hinweises auf die Patenterteilung: **18.05.1994**
(21) Anmeldenummer: 89123340.5
(22) Anmeldetag: 18.12.1989
(51) Int. Cl.: G02B 27/64, G02B 23/00

(54) **Fernrohr mit Bildfeldstabilisierung**
Telescope with image stabilisation
Téléscope avec stabilisation d'image

(30) Priorität: 24.12.1988 DE 3843775
(43) Veröffentlichungstag der Anmeldung: 04.07.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Weyrauch, Adolf, D-7080 Aalen (DE); Teichmann, Peter, D-2307 Dänischenhagen (DE); Werblinski, Dieter, D-2300 Kiel 1 (DE); Rix, Rudolf, D-2305 Heikendorf (DE)

(56) Entgegenhaltungen:
- EP-A- 0 315 853
- WO-A-80/00377
- DE-A- 1 473 901
- US-A- 3 845 929
- US-A- 4 465 346
- US-A- 4 710 656

## Beschreibung

Die Erfindung betrifft ein Fernrohr vom binokularen Typ, bei welchem die Umkehrsysteme an einem in zwei Achsen kardanisch gelagerten, symmetrischen Doppelträger befestigt sind, wobei der Doppelträger in der verbleibenden Achse mit einem gehäusefesten, unbeweglichen Grundgestell verbunden ist und für die beiden Umkehrsysteme einen gemeinsamen Lagerdrehpunkt aufweist.

Aus der DE-C 28 34 158 ist ein Prismenfernrohr mit Bildfeldstabilisierung bekannt, welches zwei kardanisch gelagerte Umkehrprismensysteme besitzt, bei dem der Lagerdrehpunkt von der Objektiv- und Okularebene gleichen Abstand hat und zwei Fernrohre zu einem binokularen Gerät verbunden sind. Die Umkehrprismensysteme beider Fernrohre sind an einem in zwei Richtungen drehbar gelagerten, symmetrischen Doppelträger befestigt, der über eine Achse mit einem gehäusefesten, unbeweglichen Träger verbunden ist und der für beide Umkehrprismensysteme einen gemeinsamen Lagerdrehpunkt aufweist. In dieser Patentschrift ist nichts gesagt über die Art der Aufhängung.

Aus dem DE-U-8714828.5 ist ein Gewehrzielfernrohr bekannt, bei welchem an einem monolithischen Federgelenk ein Umkehrsystem befestigt ist. Das Umkehrsystem ist aber im Gehäuse des Gewehrzielfernrohrs durch das Federgelenk nicht freischwingend befestigt und wird nicht zur Bildfeldstabilisierung verwendet.

Außerdem sind aktive Dämpfungsvorrichtungen bekannt, welche aber gyrostabilisiert sind und somit einen sehr anfälligen Aufbau besitzen (kreisstabilisierte optische Geräte DE-A-1473901 von 1968, Anmelder Anschütz & Co GmbH; Optically Stabilized Telescope, US Patent Nr. 4465346 von 1984, Anmelder Fraser (Stedi Eye); Fujinon Inc. in Zeitschrift Power and Motoryacht; Heft 8/87; British Aerospace Dynamics mit Steadyscope).

Aufgabe der Erfindung ist es, ein bildfeldstabilisiertes Fernrohr zu schaffen, bei welchem eine sichere Stabilisierung trotz kompakter Bauweise erfolgt.

Diese Aufgabe wird erfindungsgemäß durch den kennzeichnenden Teil des ersten Patentanspruchs gelöst. Dabei wird im folgenden die im ersten Patentanspruch erwähnte Vorrichtung als aktive Dämpfungsvorrichtung bezeichnet. Die Vorrichtung ist in der Lage, die Eigenfrequenz des schwingenden Umkehrsystems herabzusetzen und gleichzeitig eine Schwingungsdämpfung zu bewirken.

Dieses binokulare Fernrohr mit Bildfeldstabilisierung zeichnet sich durch seine äußerst kompakte und leichte Ausführung aus. Dies wird durch ein Federgelenk zur Lagerung des Umkehrsystems im Lagerdrehpunkt erreicht. Das Federgelenk zeigt im Gegensatz zu Kugellagern keine zeitliche Veränderung der Reibungskräfte. Seine gleichbleibenden Dämpfungseigenschaften ermöglichen den Einsatz einer einfachen aktiven Bewegungsdämpfungsvorrichtung zur Dämpfung der Bewegung des an dem Federgelenk befestigten Doppelträgers relativ zu einem Grundgestell, wobei die Lage des Doppelträgers relativ zum Grundgestell ermittelt und mit einem Kraftgenerator gezielt beeinflußt wird.

Damit keine Federeinspann- und Wärmeausdehnungsprobleme auftreten, ist das Federgelenk monolithisch. Die auf dem Umfang des Gelenkes vorhandenen Lagerungsfedern wirken senkrecht zur optischen Achse, wodurch eine Einkoppelung von Radialschwingungen verhindert wird. Die Federn des Federgelenks haben keinen konstanten Querschnitt, damit sie in axialer Richtung eine bessere Tragfähigkeit besitzen. Die Kreisbogenfedern gestatten es auch auf eine axiale Führung zu verzichten und so die Gesamtabmessungen zu minimieren. Zu beiden Seiten der zur Lagerung des Umkehrsystems verwendeten Lagerungsfedern befindet sich jeweils eine weitere Sicherungsfeder. Diese Sicherungsfedern fangen bei Stößen die Kräfte auf die Lagerungsfedern ab, indem sie senkrecht zur optischen Achse nachgeben, bis ein mechanischer Anschlag erreicht ist.

Auch die Sicherungsfedern haben keinen konstanten Querschnitt und sind als Kreisbogenfedern ausgeführt. Sie bilden auf dem Umfang des Federgelenkes ein umlaufendes Band, wodurch die Lagerungsfedern in einem Federparallelogramm aufgehängt sind. Der Zwischenraum zwischen zwei gegenüberliegenden Federbereichen ist durch einen Freiraum verbunden, wobei die einzelnen Freiräume räumlich versetzt angeordnet sind. Diese Freiräume sichern zusammen mit den notwendigen Einschnitten zur Ausbildung der Federn die Beweglichkeit des Federgelenkes im Auslenkungsbereich, welcher im Bereich zwischen ± 1-10° liegen sollte.

Das Federgelenk verfügt über verdickte Ränder an seinen Endflächen, welche senkrecht zur optischen Achse ausgerichtet sind. An diesen erfolgt die Befestigung der Teile, welche zueinander eine Relativbewegung haben können. Diese sind insbesondere durch das Grundgestell und den Doppelträger gegeben. Das Grundgestell ist dabei mit dem Fernrohrgehäuse verschraubt und dient als Befestigung für einen Teil des Dämpfungssystems. Der andere, schwerere Teil des Dämpfungssystems ist an dem Doppelträger befestigt, wo er als Gegengewicht für das Umkehrsystem unter Ausnutzung der Hebelgesetze dient. Dies dient der Gewichtseinsparung wie auch die Leichtbauweise des Doppelträgers und des Grundgestells.

Sofern das binokulare Fernrohr einer harten Behandlung, d.h. sehr harten Stößen ausgesetzt wird, müssen die Sicherungsfedern durch eine seperate Stoßsicherungseinrichtung unterstützt werden. Diese wird aus Gründen der Platzeinsparung im Inneren des Federgelenks befestigt. Ihre Aufgabe ist es, das Federgelenk gegen harte radiale und axiale Stöße zu schützen. Die radiale Sicherung für die Lagerungsfedern erfolgt durch einen bei der Bewegung des beweglichen Doppelträgers mitbewegten Anschlagzylinder gegenüber einer starren Kugeloberfläche, wobei die Relativbewegung der beiden zueinander berührungslos erfolgt. Die Kugeloberfläche hat dabei ihren Mittelpunkt in Drehpunkt des Federgelenks. Aufgrund der radialen Nachgiebigkeit der Sicherungsfedern (Federparallelogramm in Form von Einschnürungen auf den Gelenkumfang) ist so sichergestellt, daß bei einer radialen Belastung ein radialer Anschlag (Zylinder gegen Kugel) erfolgt und so die Lagerungsfedern in radialer Richtung nicht kritisch belastet werden. Diese Sicherung wirkt bei jeder Stellung des Doppelträgers zum Grundgestell. Entsprechende Wirkung ist bei der Sicherung gegen axiale Stöße durch beiderseitig konzentrisch zum Drehpunkt ausgebildete, starr mit dem gehäusefesten Grundgestell verbundene Kugelflächen möglich, die bei einem axialen Stoß als Anschlagflächen für in den Doppelträger geschraubte Schrauben dienen.

Da die härtesten Stöße meist nicht bei der Benutzung des Fernrohres auftreten, kann eine Festlegungsvorrichtung zur Arretierung der Bildfeldstabilisierung so ausgelegt werden, daß sie eine Sicherung gegen starke Drehbeschleunigungen darstellt. Diese Festlegungsvorrichtung besteht vorteilhafter Weise aus einem axial in der Stoßsicherungseinrichtung verschiebbaren Stab, dessen Enden als Kegel ausgebildet sind. Mit seinen Enden kann der Stab den Doppelträger in Bezug auf das Grundgestell festlegen und für eine axialkräftefreie Halterung sorgen. Der Stab dreht sich bei entarretierter Stellung nicht mit dem beweglichen, zusammengesteckten Teil der Stoßsicherungseinrichtung. Damit die Festlegevorrichtung sich von selbst wieder in die arretierte Stellung bewegt, ist sie mit einer Rückstellvorrichtung (z.B. Rückstellfeder) versehen.

Die Bewegungen des beweglichen Doppelträgers in Bezug zum Grundgestell im entarretierten Zustand werden durch die Dämpfungsvorrichtung gedämpft. Sie kann vorteilhafterweise aus hochkoerzitiven, drehbar gelagerten Permanentmagneten und zwei gehäusefesten Stromspulen mit hoher Leitfähigkeit und Magnetfeldsensor bestehen. Diese Spulen haben durch ihre Gestaltung eine nichtlineare Wirkung (Variation der Spulendicke, -form oder -material). Dadurch besteht die Möglichkeit einer achsenweisen Einstellung der Dämpfungskonstanten insbesondere unter Berücksichtigung unterschiedlicher Drehfederkonstanten der Lagerungsfedern, wodurch die Fertigungstoleranzen der Lagerungsfedern sich nicht auf die Qualität des einzelnen stabilisierten Fernrohres auswirken.

Die Stromspulen werden über einen Schalter mit einem einstellbaren Strom versorgt. Die Befestigung des Magnetfeldsensors auf der Spule sorgt für eine starre Anordnung und einen einfachen Aufbau, wobei zur Veränderung der Dämpfungskonstanten keine Teile mechanisch eingeschwenkt werden müssen. Dies ergibt sowohl Platz als auch Kostenvorteile und sorgt für einen robusten, mechanisch unanfälligen Aufbau des Dämpfungssystems.

Das Dämpfungssystem wird vorteilhaft aus Sensor (en), Verstärker (n) und Regler (n) aufgebaut.

Anstelle des oder der Regler kann auch ein Mikroprozessor die von einem A/D-Wandler digitalisierte Signale verarbeiten und die von den Magnetfeldsensoren (76a) (z.B. Hallensensor) detektierten Bewegungsänderungen über den End-Verstärker entsprechend seiner Programmierung für einen gezielten nichtlinearen Verlauf der Dämpfung verarbeiten. Dieser nichtlineare Verlauf kann dann je nach Programm kontinuierlich oder in Stufen erfolgen. Mittels eines solchen Mikroprozessors kann dann auch eine Selbstkalibrierung des Nullpunktes für den End-Verstärker und der Federkonstanten erfolgen. Durch unterschiedlichen, gegebenenfalls durch Widerstandsüberbrückung als Rasterung spürbaren Druck auf den Schalter kann eine Einknopfbedienung für Entarretierung, elektrische Aktivierung und Dämpfungseinstellung erfolgen. Solche Mikroprozessoren sind heute sogar als Ein-Chippprozessoren mit A/D-Wandler, Mikroprozessor, Speicher und Ausgabeeinheit erhältlich.

Die Erfindung wird im folgenden anhand der Ausführungsbeispiele in den Figuren 1-3 dargestellt und näher beschrieben, wobei im einzelnen darstellen
- Fig. 1a: eine Seitenansicht des Federgelenks
- Fig. 1b: einen zentralen Schnitt durch das Federgelenk
- Fig. 1c: eine Aufsicht durch das Federgelenk
- Fig. 1d: eine Bereichsansicht vom Umfang des Federgelenks
- Fig. 1e: eine Detailansicht eines Bereiches mit drei Federn
- Fig. 1f: eine Detailansicht eines Bereiches mit drei Feder im Schnitt
- Fig. 2a: ein eingebautes Federgelenk zwischen Grundgestell und Doppelträger für das Umkehrsystem in Seitenansicht
- Fig. 2b: die Anordnung aus Fig. 2a in Aufsicht
- Fig. 3a: eine Detailansicht der Seitenansicht der Stromspulen
- Fig. 3b: eine Detailansicht der Aufsicht auf eine Stromspule
- Fig. 4: eine Detailansicht der Leiterplatte
- Fig. 5: ein Schema eines Schaltplanes zum Betrieb der in Fig. 2 dargestellten Anordnung

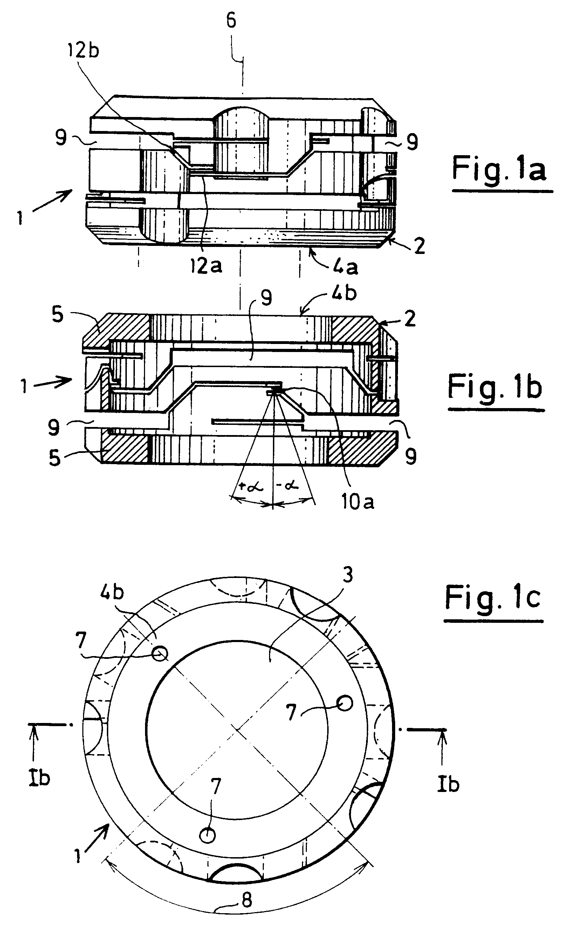

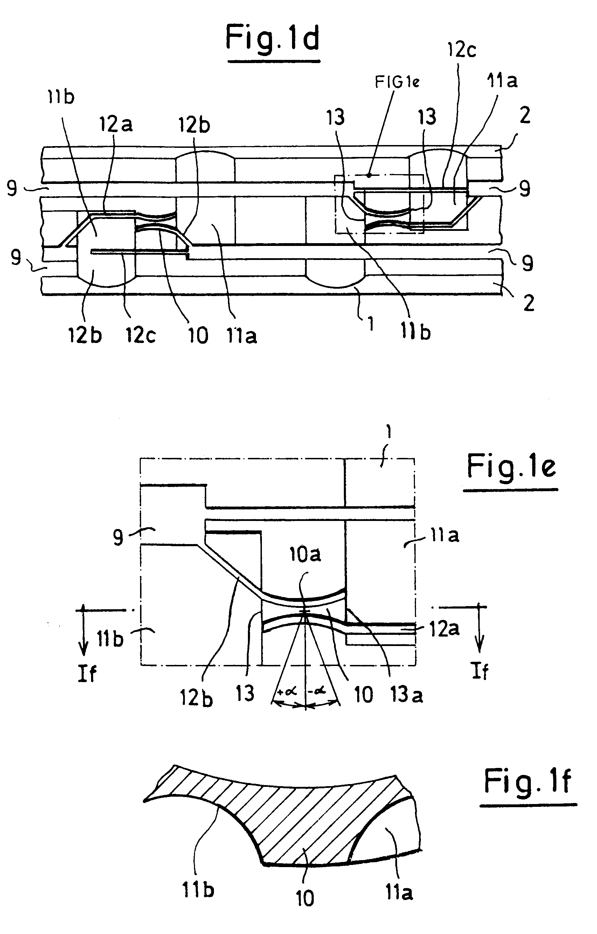

In Fig. 1a-f ist das Federgelenk (1) zu sehen, welches das Grundgestell mit dem Doppelträger verbindet. Es (1) zeichnet sich durch gleichbleibende Dämpfungseigenschaften aus, da keine sich zeitlich ändernden Reibungskräfte (wie bei Kugellagern) auftreten.

Das Federgelenk (1) besteht aus einem monolithischen, geraden Kreiszylinder, dessen Kanten (2) unter einem Winkel von 45° abgeschrägt sind. Im Inneren (3) ist dieser Kreiszylinder hohl, wobei an den Deckflächen (4a und 4b) jeweils ein verstärkter Ring (5) vorhanden ist. In den Deckflächen (4a und 4b) der verstärkten Ringe (5) sind parallel zur Zylinderachse (6) jeweils drei Gewindebohrungen (7) angebracht, die voneinander jeweils den gleichen Abstand haben.

Gleichmäßig über den Umfang verteilt sind im mittleren Teil des Kreiszylinders vier identisch wirkende Bereiche (8), welche durch Freiräume (9) parallel zu den verstärkten Ringen (5) verbunden sind. Wesentliches Element jedes dieser Bereiche (8) sind drei Federn (10, 11a und b) (siehe insbesondere Fig. 1e und 1f).

Die mittlere Feder dient als Lagerungsfeder (10) und wird durch zwei Einschnitte (12a und b) gebildet, welche von zwei seitlichen Freiräumen (9) ausgehen. Diese Einschnitte (12a und b) sind im Bereich der Federwirkung vorzugsweise kreisförmig ausgebildet, so daß sich eine in der Mitte verjüngende Kreisbogenfeder entsteht. Diese Lagerungsfeder (10) hat aufgrund ihrer dickeren Federenden (13) eine in axialer Richtung verbesserte Tragkraft, weshalb eine axiale Führung entfallen kann. Die Lagerungsfeder (10) erlaubt eine Kippbewegung um die Drehachse (10a) senkrecht zur Zylinderachse (6) des Federgelenks (1) innerhalb eines Bereiches von ± α. Die Einschnitte (12a und b) und die Freiräume (9) sind so breit ausgeführt, daß die Kippbewegung innerhalb des gewählten Winkelbereichs nicht behindert wird. Jeweils zwei Lagerungsfedern (10) liegen in zwei Bereichen (8) sich genau gegenüber.

Zu beiden Seiten der Lagerungsfeder (10) ist das Material des Zylinderumfangs bis auf Federstärke durch eine parallel zur Zylinderachse (6) durchgeführte, halbkreisförmige Materialabtragung verdünnt (siehe Fig. 1f). Die dadurch entstandenen Sicherungsfedern (11a und b) beginnen direkt neben der mittleren Lagerungsfeder (10), wobei zur Erzeugung der einen Sicherungsfeder (11b) ein weiterer Einschnitt (12c) parallel zum verstärkten Ring (5) vorhanden ist, der diese Feder (11b) vom Ring (5) trennt. Dieser Einschnitt (12c) begrenzt zusammen mit einem weiteren Einschnitt (12a) den Federbereich der Sicherungsfeder (11b) Bei der auf der anderen Seite der Lagerungsfeder (10) befindlichen Sicherungsfeder (11a) wird der federnde Bereich durch einen oberen und einen unteren Freiraum (9) axial von dem Material der Ringe (5) getrennt. Die so entstandenen Kreisbogenfedern (11a und b) sind nur noch seitlich mit dem restlichen Material des Federgelenks (1) verbunden. Die Sicherungsfedern (11a und b) wirken senkrecht zur Drehachse (10a) der Lagerungsfeder (10) und senkrecht zur Zylinderachse (6). Damit bilden die Sicherungsfedern (11a und b) einen Schutz vor radialen Stößen für die mittlere Lagerungsfeder (10). Ihre Federkonstante bestimmt sich aus der Belastbarkeit der mittleren Lagerungsfeder (10) gegen radiale Stöße im eingebauten Zustand.

Parallel zu den äußeren Ringen (5) verlaufen verbreiterte Freiräume (9), in welchen die schmaleren Einschnitte (12a-c) enden. Diese Freiräume (9) beginnen an den von der mittleren Lagerungsfeder (10) abgewandten Seite der Sicherungsfedern (11a und b) und enden auch an einer solchen Seite, wenn in ihnen der längere Einschnitt (12a) zur Ausbildung der mittleren Lagerungsfeder (10) endet. Enden in den Freiräumen (9) hingegen die kürzeren Einschnitte (12b) zur Ausbildung der mittleren Lagerungsfeder (10), so beginnen die Freiräume (9) kurz vor der, der mittleren Lagerungsfeder (10) zugewandten Seite der Sicherungsfeder (11b) und enden auch entsprechend. Da die jeweils die gegenüberliegenden Bereiche (8) verbindenden Freiräume (9) sich über einen großen Winkel erstrecken, trennen sie eine Sicherungsfeder (11a) vom verstärkten Ring (5). Jeweils parallel der beiden verstärkten Ringe (5) existieren so zwei Freiräume (9), wobei die oberen Freiräume (9) in Bezug zu den unteren Freiräumen (9) um ∼ 90° versetzt angeordnet sind. Dies gewährleistet, daß das Federgelenk (1) eine Kippbewegung im ausgewählten Winkelbereich ± α durchführen kann. Die Federn (10,11a,11b) existieren jeweils einmal in jedem der vier Bereiche (8).

Die monolithische Ausführung des Federgelenkes (1) hat den Vorteil, daß keine Federeinspannprobleme und keine Wärmeausdehnungsprobleme durch die Verwendung unterschiedlicher Materialien bestehen.

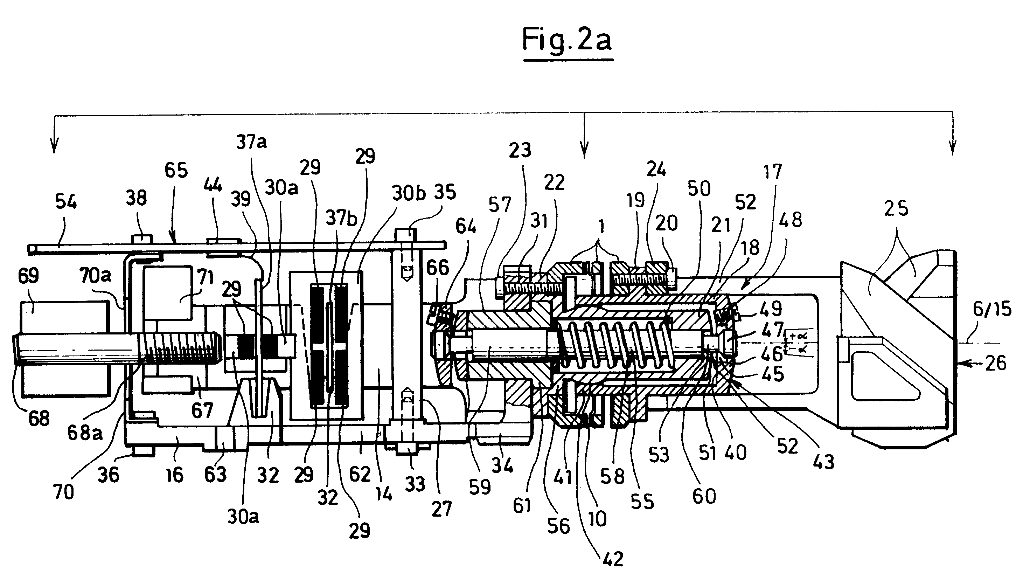

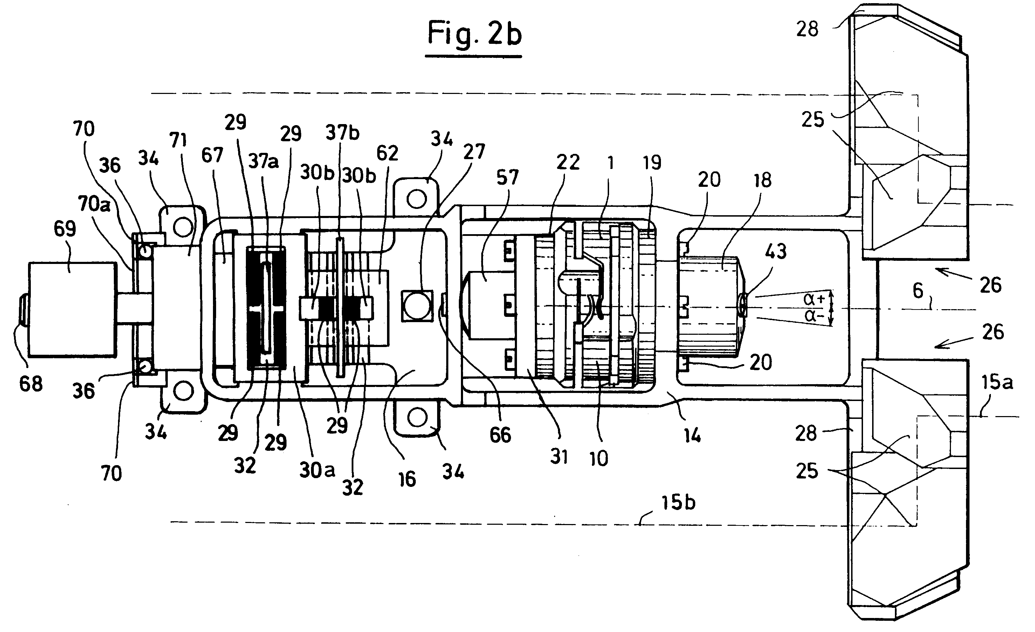

In Fig. 2a und b ist das Federgelenk (1) im eingebauten Zustand zu sehen. Da die Lagerungsfedern (10) senkrecht zur Zylinderachse (6) des Federgelenks (1) wirken, werden keine Radialschwingungen in die Bewegungen des beweglichen Doppelträgers (14) eingekoppelt. Die Zylinderachse (6) verläuft parallel zu den optischen Achsen (15a und b).

Der Doppelträger (14) und das, mit dem Fernrohrgehäuse (hier nicht eingezeichnet) verbundene Grundgestell (16) sind über das Federgelenk (1) und einen Zwischenkörper (17) gegeneinander in einem begrenzten Winkelbereich ± α bewegbar verbunden.

Der über das Federgelenk (1) mit dem Grundgestell (16) verbundene bewegliche Doppelträger (14) hat zwei Funktionen. Erstens dient er als Träger der aus Prismen (25) aufgebauten Umkehrsysteme (26) und zweitens ist ein Teil der Bewegungsdämpfungsvorrichtung an ihm befestigt. Zur Aufnahme der beiden Umkehrprismensysteme (26) besitzt der bewegliche Doppelträger (14) zwei Ausleger (28) an seiner dem Okular zugewandten Seite. Die durch die Objektive (hier nicht eingezeichnet) und die Umkehrprismensystemen (26) definierten optischen Achsen (15a und b) verlaufen zu der Symmetrieachse (6) des Federgelenks (1) parallel.

Auf der den Auslegern (28) gegenüberliegenden Seite ist die Bewegungsdämpfungsvorrichtung angebracht. Der bewegliche Doppelträger (14) ist in diesem Teil so ausgebildet, daß er die Magnete (29) der aktiven Dämpfungsvorrichtung halten kann. Die Magnete (29) in dem Magnetträger (30a und b) bilden ein Gegengewicht zu den Umkehrprismensystemen (26) auf den Auslegern (28), so daß der befestigte bewegliche Doppelträger (14) bezüglich der Lagerung an dem Federgelenk (1) in seinem Schwerpunkt gehalten wird.

Der bewegliche Doppelträger (14) besteht aus Leichtmetall und ist konstruktiv so ausgelegt, daß er möglichst leicht ist.

Auf einer Seite ist das Federgelenk (1) über den Flansch (22) des Anschlagkörpers (21) mit einem Flansch (31) des Grundgestells (16) verbunden. Der Flansch (31) ist ein rechtwinkliger Ausleger des Grundgestells (16), wobei die konstruktive Auslegung des Grundgestells (16) eine ungehinderte Bewegung des beweglichen Doppelträgers (14) im festgelegten Winkelbereich ± α sicherstellt.

An dem Grundgestell (16) befinden sich vier Ausleger (34) mit Löchern. An diesen Löchern und einem weiteren Loch (63) im Grundgestell (16) erfolgt die Verschraubung des Grundgestells (16) mit dem Fernrohrgehäuse (hier nicht eingezeichnet). Damit das Grundgestell (16) bei der Montage im Fernrohrgehäuse (hier nicht eingezeichnet) eine sichere Auflage hat, sind um die Löcher auf der Unterseite des Grundgestells (16) plane Auflageflächen vorhanden.

Sie werden dabei durch weitere, feste Gegengewichte (67, 71) und variable Gegengewichte (68, 69) unterstützt, wobei die Variabilität letzterer durch eine Entfernungsvariation des Endstücks (69) durch den mit einem Gewinde (68a) in dem feste Gegengewicht (67) befestigten Stab (68) erfolgt. Starr mit dem Grundgestell (16) sind die stromdurchflossenen Spulen (30a, 30b) über Spulenhalter (32) verbunden. Distanzhalter (27, 70) halten die Elektronikkarte (54) mit der Stromversorgung. Diese Distanzhalter (27, 70) sind sowohl mit dem Grundgestell (16) als auch mit der Elektronikkarte (54) verschraubt (33, 36 und 35, 38). Im hinteren Distanzhalter (70) befindet sich für die Stange (68) des Gegengewichtes (69) eine öffnung (70a), damit sich der Doppelträger (14) ungestört bewegen kann. Aus demselben Grund hat sowohl das Grundgestell (16) als auch die Elektronikkarte (54) eine öffnung (62, 65). Auf der Elektronikkarte (54) befinden sich Anschlüsse (44) zur Stromversorgung der Spulen (30a, 30b) über Kabel (39) (wobei in dieser Ansicht nur das Kabel (39) für die eine Spule (30a) zu sehen ist).

Sowohl das Grundgestell (16) als auch der bewegliche Doppelträger (14) sind über einen Flansch (22,19) des Zwischenkörpers (17) am Federgelenk (1) befestigt. Der Zwischenkörper (17) besteht im wesentlichen aus drei Teilen:
a) aus einem Führungskörper (18), an dessen seitlichem Flansch (19) der Doppelträger (14) an dem Federgelenk (1) mit mehreren Schrauben (20) angeschraubt ist;
b) aus einem Anschlagkörper (21), an dessen Flansch (22) das Grundgestell (16) an dem Federgelenk (1) mit mehreren Schrauben (23) angeschraubt ist;
c) aus einer beweglichen Stange (55), welche sich im Zwischenkörper (17) befindet und als Festlegevorrichtung im arretierten Zustand dient.

Der Führungskörper (18) besteht aus einem auf einer Seite offenen Kreiszylinder mit einer inneren Zylinderbohrung, welche an der geschlossenen Seite in einer zur Zylinderachse (6) ebenen Fläche (40) endet. Die innere Zylinderbohrung endet auf der offenen Seite in einem verjüngten Bereich (41), dessen Durchmesser nur einige 1/10 mm größer ist als der Radius der Außenfläche einer kugelförmigen Verdickung (42) des Anschlagkörpers (21). Im montierten Zustand liegen diese beiden Fläche einander gegenüber.

Die äußere Begrenzungsfläche (43) der geschlossenen Seite des Führungskörpers (18) ist zum Rand hin leicht abgeflacht. Eine Bohrung (45) um die Zylinderachse (6) verbindet die ebene Fläche (40) der inneren Zylinderbohrung mit der äußeren Begrenzungsfläche (43), wobei sich die Bohrung (45) nach einem Absatz (46) auf die Größe des Kreiszylinderrringes um den Kopf (47) der Stange (55) verringert. Durch die äußere Begrenzungsfläche (43) geht im Randbereich eine Gewindebohrung (48) für eine Schraube (49), wobei die Schraubenachse die Zylinderachse (6) an der Stelle schneidet, an der der Kugelradius der kugelförmigen Verdickung (42) seinen Mittelpunkt hat.

Der Anschlagkörper (21) besteht aus einem auf einer Seite offenen Kreiszylinder mit einer inneren Zylinderbohrung. An der geschlossenen Seite endet die innere Zylinderbohrung in einer zur Zylinderachse ebenen Fläche (50). Die äußere Begrenzungsfläche (51) der geschlossenen Seite ist kugelförmig abgerundet, wobei der Mittelpunkt des Kugelradius auf der Zylinderachse an der Stelle sitzt, wo auch die kugelförmigen Verdickungen (42) im unteren Teil des Kreiszylinders ihren Mittelpunkt haben. Eine Bohrung (52) um die Zylinderachse (6) verbindet die ebene Fläche (50) der inneren Zylinderbohrung mit der äußeren Begrenzungsfläche (51), wobei die Bohrung (52) einen Absatz (53) hat, welcher als Anschlag für den mittleren Teil der beweglichen Stange (55) dient.

Unterhalb der kugelförmigen Verdickung (42) geht der Zylinder (21) in eine Muffe (56) über, wobei sich der Durchmesser der inneren Zylinderbohrung zur Aufnahme einer einsteckbaren Buchse (57) vergrößert. Das Muffenende ist als Flansch (22) ausgebildet.

In die Innenbohrung des Anschlagkörpers (21) wird bei der Montage eine Stange (55) eingeführt, wobei sich um die Stange (55) eine gewundene Feder (58) mit rundem Querschnitt befindet. Ein Teil (59) der Stange (55) ist verdickt, wobei dieser Teil (59) in Richtung zur eingesteckten Buchse (57) für die Feder (58) eine Sperre darstellt. Die Stange (55) wird durch die Bohrung (52) des Anschlagkörpers (21) geschoben, bis zu dem Absatz (53), welcher als Anschlag für den mittleren Teil der beweglichen Stange (55) dient. In dieser Position ragt nur ein Teil des sich an den mittleren Teil der Stange (55) anschließenden Stangenhalses (60) und der auf diesem sitzende Stangenkopf (47) über die äußere Begrenzungsfläche (51) des Anschlagkörpers (21) hinaus.

Auf der anderen Seite der Stange (55) ist diese in einem Teilstück (59) verdickt. Dieses verdickte Teilstück (59) befindet sich im Inneren einer Buchse (57), deren verdickte Randwulst (61) in der Muffe (56) des Anschlagkörpers (21) gehalten wird. Im in Fig. 2a dargestellten, arretierten Zustand drückt die Feder (58) die Stange (55) bis zum Anschlag (53) in die Bohrung (52) des Anschlagkörpers (21). In dieser Stellung ragt nur ein Teil des auf das verdickte Teilstück (59) aufgesetzten Stangenhalses (60a) und der an ihm befestigte Stangenkopf (47a) über die äußere Begrenzungsfläche (62) der Buchse (57) hinaus. Diese äußere Begrenzungsfläche (62) ist kugelförmig abgerundet, wobei der Mittelpunkt des Kugelradiuses mit dem der äußeren Begrenzungsfläche (51) des Anschlagkörpers (21) übereinstimmt.

Die Köpfe (47 und 47a) der Stange (55) sind an der dem Stangenhals (60 und 60a) zu- und abgekehrten Seite abgeschrägt, so daß nur noch ein Kreiszylinderring in der Mitte der Köpfe (47 und 47a) verbleibt. In diesen Bereichen liegt die Stange (55) in der Bohrung (45) des Führungskörpers (18) und auf der anderen Seite in einer Bohrung (63) eines Festlegungsflansches (64), welcher an dem beweglichen Doppelträger (14) angeschraubt ist, so daß sich der bewegliche Doppelträger (14) in Bezug auf das Grundgestell (16) in dieser Stellung der Stange (55) nicht bewegen kann, d.h. arretiert ist. Die der Buchse (57) abgewandte Seite ist im mittleren Bereich leicht verdickt. Durch die Fläche dieser Seite geht im Randbereich eine Gewindebohrung (65) für eine Schraube (66), wobei die Schraubenachse die Zylinderachse (6) im Mittelpunkt des Kugelradius der kugelförmigen Verdickung (42) des Anschlagkörpers (21) schneidet.

Durch die Schrauben (66,49) wird eine Bewegung entlang der Achse (6) bezüglich des Doppelträgers (14) zum Grundgestell (16) verhindert.

Die Bohrung (63) des Festlegungsflansches (64) hat einen Absatz (44), an welchem sich der Bohrungsdurchmesser auf der der Buchse (57) zugewandten Seite vergrößert.

Damit sich der bewegliche Doppelträger (14) relativ zum Grundgestell (16) bei Benutzung frei bewegen kann, müssen die Stangenköpfe (47 und 47a) aus den Bohrungen (63, 45) des Festlegungsflansches (64) und des Führungskörpers (18) entfernt werden (siehe Fig. 2b). Dazu wird der Stab (55) durch einen hier nicht dargestellten, mit dem Fernrohrgehäuse verbundenen Mechanismus in axialer Richtung durch den Festlegungsflansch (64) gezogen, bis sich in der Bohrung (63) des Festlegungsflansches (64) nur noch der Stangenhals (60) befindet. Der andere Stangenkopf (47) wird dabei in Richtung des Anschlagkörpers (21) entgegen der Wirkung der Feder (58) aus der Bohrung (45) gezogen.

Nun kann sich der bewegliche Doppelträger (14) relativ zum Grundgestell (16) bewegen, wobei diese Bewegung primär durch das Bewegungsdämpfungssystem (27) gedämpft wird. Der Bewegungsspielraum wird durch die Bemaßung der Bohrung (63) des Festlegungsflansches (64) und Stangenhalsdurchmesser begrenzt, wobei ein Winkelbereich α von 2,5° in keiner der beiden Bewegungsrichtungen unterschritten wird. Durch diese konstruktive Lösung dient der in der Bohrung (63) bewegliche Stangenhals (60) auch gleichzeitig als Sicherung gegen starke Drehbeschleunigungen, welche das Federgelenk (1) zerstören würde. Wenn man keine Bildfeldstabilisierung mehr wünscht, muß man nur den Zug auf den Stangenkopf (47a) beenden. Die Stange (55) bewegt sich auf Grund der Federkraft wieder in ihre Grundstellung.

Ist die Stange (55) in ihrer Arretierposition gemäß Fig. 2a eingerastet, so wird die gesamte Stabilisierungsanordnung axialkräftefrei gehalten.

Damit die empfindlichen Lagerungsfedern (10) im eingebauten Zustand auch härteste Belastungen (Stoß, Fall, ...) aushalten können, müssen für jede Bewegungsrichtung Stoßsicherungen vorhanden sein. Eine Stoßsicherung gegen Radialstöße in entarretiertem Zustand wird durch die kugelförmige Verdickung (42) des Anschlagkörpers (21) gebildet, welche zu dem sie umgebenden verjüngten Bereich (41) der inneren Zylinderbohrung des Führungskörpers (18) einen sehr geringen, freien Abstand hat. Die kugelförmige Verdickung (42) liegt im Gelenkinneren konzentrisch zum Lager- und Drehpunkt des Federgelenks (1) und kann sich im Normalbetrieb berührungslos im Führungskörper (18) bewegen.

Die radiale Nachgiebigkeit des Federgelenks (1) durch die seitlichen Sicherungsfedern (11a und b) muß so bemessen sein, daß ein radialer Anschlag der Verdickung (42) gegen die Zylinderverjüngung (41) bei einer plötzlichen Belastung erfolgt, bevor die mittleren Lagerungsfedern (10) des Federgelenks (1) in radialer Richtung kritisch belastet werden. Da die Sicherungsfedern (11a und b) ein Federparallelogramm auf den Umfang des Kreiszylinders bilden, ist gewährleistet, daß bei jedem radialen Stoß der oben beschriebene Anschlag erfolgt.

Diese Stoßsicherung wird durch eine weitere gegen axiale Stöße im entarretierten und arretierten Zustand ergänzt. Dazu dienen die schon erwähnten Schrauben (66,49). Die Schrauben (49,66) zeigen mit ihren Schraubenachsen auf den Mittelpunkt der Kugelflächen (51,62) und haben somit, da der Mittelpunkt der Kugelflächen (51,62) mit dem Lagerungspunkt übereinstimmt, von diesen auch bei Bewegung des beweglichen Doppelträgers (14) relativ zum Grundgestell (16) immer den gleichen Abstand.

Bei einem axialen Schock müssen nun die Federn (10) des Federgelenks (1) durch ihre axiale Nachgiebigkeit nur sehr gering nachgeben, bis sich die Anschlagschrauben (49, 66) an den Kugelflächen (51, 62) abstützen und so die Lagerungsfedern (10) vor kritischer Belastung schützen.

Die Verwendung einer aktiven Dämpfungsvoreinrichtung hat den Vorteil, daß keine zeitlich veränderlichen Reibungskräfte auftreten. Dadurch hat man mit dieser einfachen, kostengünstigen Lösung ein System mit gleichbleibenden Dämpfungseigenschaften. Die am beweglichen Doppelträger (14) befestigten Magnete (29) stellen mit ihrer relativ großen Masse ein gutes Gegengewicht zu den Prismen (25) dar und erzeugen ein sehr starkes Magnetfeld (im Luftspalt 0,5 T), weshalb der Luftspalt relativ groß sein darf. Als Magnete (29) werden hochkoerzitive Permanentmagnete aus seltenen Erden-Kobalt (z.B. Neodym-Eisen oder Samarium-Co) verwendet.

Die gehäusefesten Stromspulen (37a und b) haben eine hohe Leitfähigkeit (Kupferspulen), in der sich bei einer Relativbewegung der Magnete (29) bezüglich der Spulen (37a und b) Ströme ausbilden, die die Bewegungen des Drehfeder-Drehmasse-Systems aus Federgelenk (1) und beweglichem Doppelträger (14) dampfen. Die Dämpfungskraft ist dabei proportional zur Stromstärke.

Jede Stromspule (37a und b) besteht aus einer freitragenden, stromdurchflossenen Spule für jede Bewegungsrichtung, die über einen Schalter S1 am Fernrohrgehäuse (hier nicht eingezeichnet) mit Strom versorgt werden können. Dies ermöglicht bei Bedarf die einstellbare Ausbildung von Gegenkräften, wobei die Dämpfung ohne mechanisch einschwenkende Teile den jeweiligen Bedürfnissen angepaßt werden kann. Diese Dämpfungsumschaltung ist somit ohne weitere Kosten- oder Platznachteile zu realisieren; insbesondere, da die Spulen (37) selbst als Träger verwenden, wodurch ein sehr einfacher, funktionssicherer Aufbau gegeben ist.

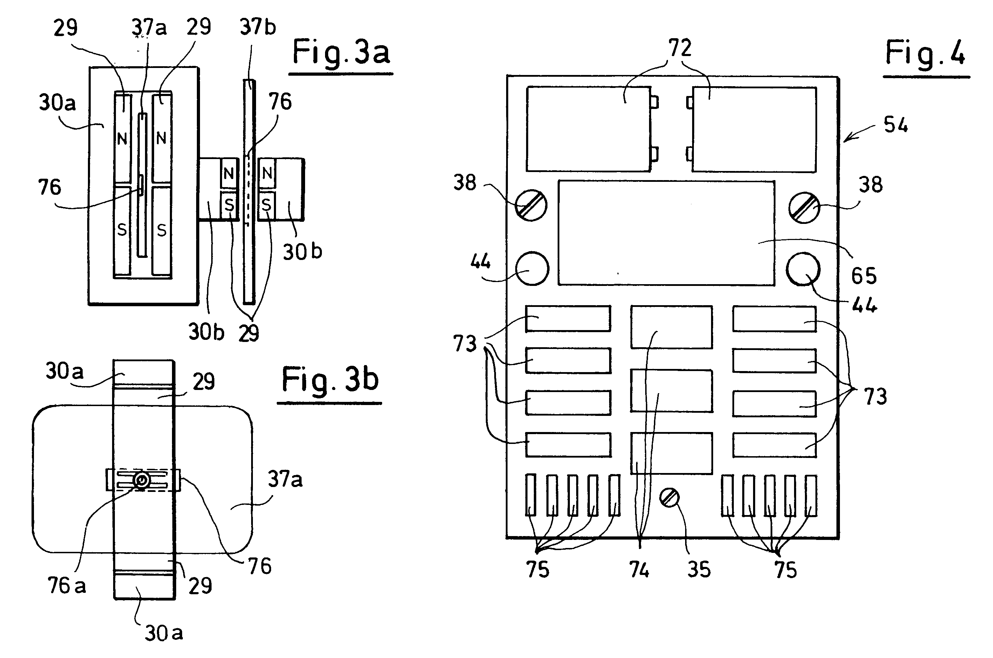

In Fig. 3a und b ist die Bewegungsdämpfungseinrichtung mit ihren wichtigsten Teilen noch einmal gezeigt. Nur die Magnete (29) mit den Magnetträgern (30a,b) sind relativ zum Grundgestell (16) frei beweglich. Die Spulen (37a, b) und der in ihnen befestigte Magnetfeldsensor (76a) auf einer flexiblen Leiterplatte (76) sind hingegen relativ zum Grundgestell (16) starr. Durch den Magnetfeldsensor (76a) kann die relative Bewegung des beweglichen Trägers (14) relativ zum Grundgestell (16) durch die 2 x 4 Magnete für jeden Magnetfeldsensor (76a) auf Grund der in sinnvoller Weise gewählten Ausrichtung der Magnetpole von diesem detektiert werden. Die Stromversorgung erhalten die Spulen (37a, b) von der in Fig. 4 gezeigten Elektronikkarte (54), welche sowohl die Verstärker- und Regler-IC's (74) mit den zur Beschaltung notwendigen Bausteinen (75) (Widerstände, Kondensatoren, ...), die variablen Widerstände (73) zur Grundeinstellung als auch die Spannungsquelle (72) aufnimmt. Sie ist mit Schrauben (35, 38) an den Distanzhaltern (27, 70) befestigt und hat eine öffnung (65), um die Bewegungsfreiheit des beweglichen Doppelträgers (14) sicherzustellen.

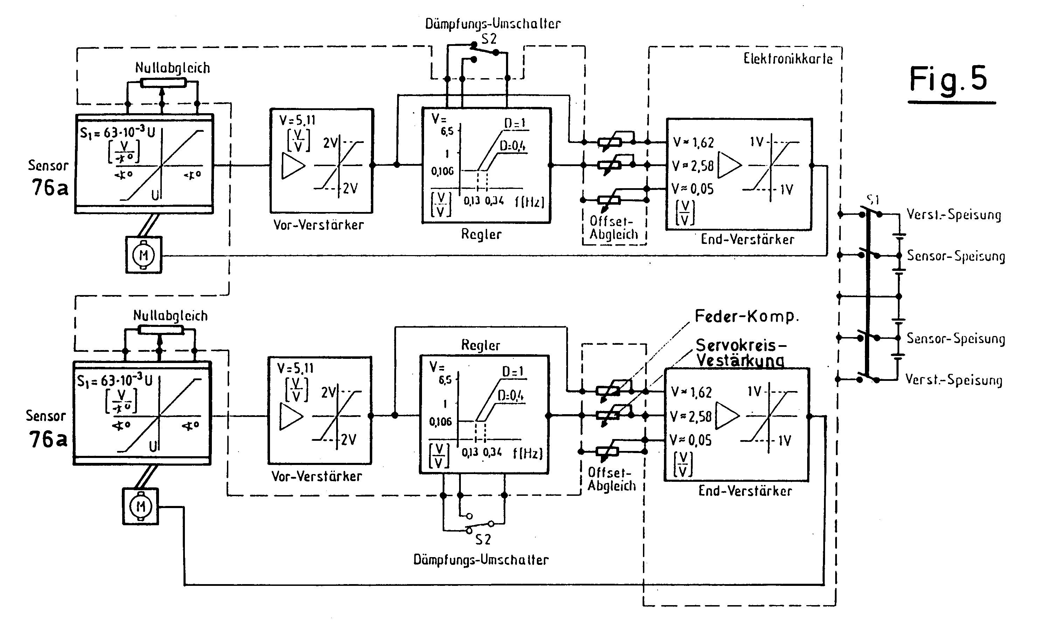

In Fig. 5 ist nun die Wirkungsweise der Schaltung für die Dämpfungsvorrichtung zu sehen. Von dem Magnetfeldsensor (76a), der über einen Nullausgleich eingestellt wurde, gelangt das detektierte Signal auf einen Vor-Verstärker. Dieses vorverstärkte Signal gelangt dann auf einen Regler, über den die Dämpfung gesteuert wird. Dieser Regler ist über einen, dem Fernrohrbenutzer zugänglichen Schalter S2 in seinen Dämpfungseigenschaften veränderbar. Dessen Ausgangssignal gelangt mit einem Signal des Vorverstärkers über einen regelbaren Widerstand auf einen Endverstärker, der den Spulenstrom festlegt. Der Spulenstrom sorgt für eine Bewegungsdämpfung der bewegten Magnete (29) relativ zu den stromdurchflossenen Spulen (37a, b), was der in diesen eingebettete Magnetfeldsensor (76a) detektiert. Damit ist der Regelkreis geschlossen. Eingeschaltet wird die Bewegungsdämpfung über einen Schalter S1, der die Verstärker- und Sensor-Speisung einschaltet und den beweglichen Doppelträger (14) vom Grundgestell (16) entarretiert.

Anstelle des oder der Regler kann auch ein Mikroprozessor die von einem A/D-Wandler digitalisierte Signale verarbeiten und einsprechend den von den Magnetfeldsensoren (76a) (z.B. Hallsensor) detektierten Bewegungsänderungen über den End-Verstärker entsprechend seiner Programmierung für einen gezielten nichtlinearen Verlauf der Dämpfung sorgen. Dieser nichtlineare Verlauf kann dann je nach Programm kontinuierlich oder in Stufen erfolgen. Mittels eines solchen Mikroprozessors kann dann auch eine Selbstkalibrierung des Nullpunktes für den End-Verstärker und der Federkonstanten erfolgen. Durch unterschiedlichen, gegebenenfalls durch Widerstandsüberbrückung als Rasterung spürbaren Druck auf den Schalter ist eine Einknopfbedienung für Entarretierung, elektrische Aktivierung und Dämpfungseinstellung möglich. Mikroprozessoren der oben beschriebenen Art sind heute sogar als Ein-Chipprozessoren mit A/D-Wandler, Mikroprozessor, Speicher und Ausgabeeinheit erhältlich.

## Patentansprüche

1. Fernrohr vom binokularen Typ, bei welchem die Umkehrsysteme (26) an einem in zwei Achsen kardanisch gelagerten, symmetrischen Doppelträger (14) befestigt sind, wobei der Doppelträger in der verbleibenden Achse mit einem gehäusefesten, unbeweglichen Grundgestell (16) verbunden ist und für die beiden Umkehrsysteme einen gemeinsamen Lagerdrehpunkt aufweist, dadurch gekennzeichnet, daß ein Federgelenk (1) zwischen Doppelträger (14) und Grundgestell (16) vorhanden und eine Vorrichtung (29,37,54) an dem Doppelträger (14) und dem Grundgestell (16) angebracht ist, welche die Lage des Doppelträgers relativ zum Grundgestell ermittelt und mit einem Kraftgenerator gezielt beeinflußt.

2. Fernrohr nach Anspruch 1, dadurch gekennzeichnet, daß die Vorrichtung aus einem sich mitbewegenden Magnetsystem (29) und einem gehäusefesten Spulensystem (37a und 37b) mit Magnetfeldsensor (76a) aufgebaut ist.

3. Fernrohr nach Anspruch 2, dadurch gekennzeichnet, daß der Querschnitt quer zum Magnetsystem (29) und/oder die geometrische Form (parallel zum Magnetsystem) der Stromspulen (37a,37b) nicht konstant ist.

4. Fernrohr nach einem der Ansprüche 2-3, dadurch gekennzeichnet, daß in der Stromspule (37) der Magnetfeldsensor (76a) befestigt ist.

5. Fernrohr nach einem der Ansprüche 1-4, dadurch gekennzeichnet, daß das Federgelenk (1) monolithisch ausgeführt ist.

6. Fernrohr nach einem der Ansprüche 1-5, dadurch gekennzeichnet, daß die Lagerungsfedern (10) des Federgelenks (1) senkrecht zur optischen Achse (15) ausgerichtet sind.

7. Fernrohr nach einem der Ansprüche 1-6, dadurch gekennzeichnet, daß die Federn (10,11a,11b) des Federgelenks (1) zum Rand hin verdickt ausgeführt sind.

8. Fernrohr nach einem der Ansprüche 1-7, dadurch gekennzeichnet, daß ein Mikroprozessor in der Vorrichtung vorhanden ist, der das Bewegungsverhalten des Umkehrsystems gezielt beeinflußt.

9. Fernrohr nach einem der Ansprüche 1-8, dadurch gekennzeichnet, daß eine Stoßsicherungseinrichtung um den Lagerdrehpunkt angebracht ist.

10. Fernrohr nach Anspruch 9, dadurch gekennzeichnet, daß die Stoßsicherungseinrichtung im Bereich des Lagerdrehpunktes im Federgelenk (1) angebracht ist.

11. Fernrohr nach einem der Ansprüche 1-10, dadurch gekennzeichnet, daß eine axial wirkende Festlegungsvorrichtung zwischen Doppelträger (14) und Grundgestell (16) angebracht ist.

12. Fernrohr nach Anspruch 11, dadurch gekennzeichnet, daß die axiale Festlegungsvorrichtung in der Stoßsicherungseinrichtung angebracht ist.

## Claims

1. Telescope of the binocular type wherein the inverting systems (26) are mounted on a symmetrical double holder (14) cardanically supported in two axes, the double holder is connected in the remaining axis with a non-movable base frame (16) fixed to the housing of the telescope and has a common support pivot point for both inverting systems (26), characterised in a spring joint (1) connecting said double holder (14) and said base frame (16) and means (29, 37, 54) arranged at the double holder (14) and at the base frame (16) for detecting the position of said double holder (14) relative to said base frame (16) and for influencing this position with a force generator in a predetermined manner.

2. Telescope of claim 1, said damping means including a magnet system (29) mounted on said double holder for moving therewith and a coil means (37a and 37b) fixedly connected to the housing of the telescope with a magnetic field sensor (76a).

3. Telescope of claim 2, whereby the cross section transverse to said magnet system (29) and/or the geometrical form (parallel to the magnet system) of said coil means is non-constant.

4. Telescope of claim 2 or 3, said magnetic field sensor (76a) is mounted in said coil means (37).

5. Telescope of claim 1-4, said spring joint being a monolithic unit.

6. Telescope of claim 1-5, whereby the supporting springs (10) of said spring joint (1) are arranged so as to be aligned perpendicularly to the optical axes (15).

7. Telescope of claim 1-6, whereby the supporting springs (10, 11a, 11b) of said spring joint (1) having thicket end regions.

8. Telescope of claim 1-7, said damping means including a microprocessor for influencing the movement in a predetermined manner.

9. Telescope of claim 1-8, comprising a shock protective device mounted in surrounding relationship to said support pivot point.

10. Telescope of claim 9, said shock protective device being mounted in the region of said pivot point inside said spring joint (1).

11. Telescope of claim 1-10, said telescope further comprising axial acting fixing means being mounted between the double holder (14) and the base frame (16).

12. Telescope of claim 11, said fixing means being mounted inside said shock protective device.

## Revendications

1. Lunette du type binoculaire, dans lequel les systèmes de redressement (26) sont fixés sur un support symétrique double (14), monté à la cardan autour de deux axes, et dans lequel le support double (14) est relié, sur l'axe restant, au châssis de base immobile (16), solidaire du boîtier et possède un centre de rotation commun de tourillonnage pour les deux systèmes de redressement (26), caractérisée par le fait qu'une articulation à ressorts (1) est disposée entre le support double (14) et le châssis de base (16) et qu'un dispositif (29, 37, 54) est monté sur le support double (14) et sur le châssis de base (16), ce dispositif déterminant la position du support double par rapport au châssis de base et influençant, de façon ciblée, un générateur de force.

2. Lunette selon la revendication 1, caractérisée en ce que le dispositif est constitué par un système magnétique (29), qui se déplace conjointement, et par un système de bobines (37a et 37b), qui est fixé au boîtier et comporte un capteur de champ magnétique (76a).

3. Lunette selon la revendication 2, caractérisée en ce que la section transversale, qui s'étend transversalement par rapport au système magnétique (29) et/ou la forme géométrique (parallèlement au système magnétique), de la plaque à courants de Foucault (37a, 37b) n'est pas constante.

4. Lunette selon l'une des revendications 2-3, caractérisée en ce que le capteur de champ magnétique (76a) est fixé dans la bobine de courant (37).

5. Lunette selon l'une des revendications 1-4, caractérisée en ce que l'articulation à ressorts (1) est réalisée sous forme monolithique.

6. Lunette selon l'une des revendications 1-5, caractérisée en ce que les ressorts de support (10) de l'articulation à ressorts (1) sont dirigés perpendiculairement à l'axe optique (15).

7. Lunette selon l'une des revendications 1-6, caractérisée en ce que les ressorts (10, 11a, 11b) de l'articulation à ressorts (1) sont épaissis en direction du bord.

8. Lunette selon l'une quelconque des revendications 1-7, caractérisée en ce que dans le dispositif est présent un microprocesseur qui influe d'une manière ciblée sur le comportement de déplacement du système de redressement.

9. Lunette selon l'une quelconque des revendications 1-8, caractérisée en ce qu'un dispositif de protection contre les chocs est monté autour du centre de rotation de tourillonnage.

10. Lunette selon la revendication 9, caractérisée en ce que le dispositif de protection contre les chocs est monté dans la zone du centre de rotation de tourillonnage, dans l'articulation à ressorts (1).

11. Lunette selon l'une quelconque des revendications 1-10, caractérisée en ce qu'un dispositif de fixation à action double est monté entre le support double (14) et le châssis de base (16).

12. Lunette selon la revendication 11, caractérisée en ce que le dispositif de fixation axial est monté dans le dispositif de protection contre les chocs.
